# EUROPÄISCHE PATENTSCHRIFT

(11) **EP 2 912 156 B1**
(45) Veröffentlichungstag und Bekanntmachung des Hinweises auf die Patenterteilung: **29.08.2018**
(21) Anmeldenummer: 13759742.3
(22) Anmeldetag: 10.09.2013
(51) Int. Cl.: C11D 3/39, C11D 3/48, A01N 43/76, A01N 43/78, A01N 37/28

(54) **VERWENDUNG VON ACYLHYDRAZON IN WASCH- UND REINIGUNGSMITTELN**
USE OF ACYL HYDRAZONE IN DETERGENT COMPOSITIONS
UTILISATION D'UN ACYL HYDRAZONE DANS LES COMPOSITIONS DÉTERGENTES

(30) Priorität: 23.10.2012 DE 102012219359
(43) Veröffentlichungstag der Anmeldung: 02.09.2015
(73) Patentinhaber: Henkel AG & Co. KGaA, 40589 Düsseldorf (DE)
(72) Erfinder: HÄTZELT, André, 40591 Düsseldorf (DE); WEIDE, Mirko, 40223 Düsseldorf (DE)
(86) Internationale Anmeldenummer: PCT/EP2013/068651
(87) Internationale Veröffentlichungsnummer: WO 2014/063857

(56) Entgegenhaltungen:
- WO-A1-2009/124855
- WO-A1-2012/080088
- THAS MOREIRA OSRIO ET AL: "Antibacterial activity of chalcones, hydrazones and oxadiazoles against methicillin-resistant", BIOORGANIC & MEDICINAL CHEMISTRY LETTERS, PERGAMON, GB, Bd. 22, Nr. 1, 8. November 2011 (2011-11-08), Seiten 225-230, XP028352308, ISSN: 0960-894X, DOI: 10.1016/J.BMCL.2011.11.059 [gefunden am 2011-11-23]

## Beschreibung

Die vorliegende Erfindung betrifft die Verbesserung der antimikrobiellen Wirksamkeit von Wasch- und Reinigungsmitteln durch die Kombination von Bleichmitteln mit bestimmten Acylhydrazonen.

Mikroorganismen, wie Bakterien, Pilze und Viren können sich auf Oberflächen im Haushalt und auf Textilien ansiedeln; Bakterien und Pilze können sich auf solchen Oberflächen auch vermehren. Dies kann Hygienerisiken zur Folge haben, aber auch zu unästhetischen mikrobiellen Belägen, sogenannten Biofilmen, sowie zu unangenehmen Gerüchen führen.

Insbesondere bei niedrigen Temperaturen werden Mikroorganismen im Waschprozess oft in nicht ausreichendem Maße abgetötet oder wenigstens vom Textil entfernt. Dies kann zur Verbreitung von Keimen von einem Textil auf ein anderes während des Waschprozesses, insbesondere wenn bei diesem ein bleichefreies Waschmittel zum Einsatz kommt, führen.

Wasserstoffperoxid und insbesondere kurzkettige Percarbonsäuren wie Peressigsäure, die unter der perhydrolytischen Wirkung des Wasserstoffperoxids aus Bleichaktivatoren wie TAED freigesetzt werden, sorgen für ein gewisses Maß an Wäschehygiene durch den Waschprozess bei Temperaturen über 40°C. Bei niedrigeren Temperaturen ist ihr desinfizierender Effekt allerdings deutlich eingeschränkt.

Herkömmliche Bleichkatalysatoren wie zum Beispiel MnTACN zeigen trotz guter Bleichleistungen bei niedrigen Temperaturen keine Verbesserung der Hygieneleistung von Waschmitteln.

Aus Bioorgan. Med. Chem. Lett. 22 (2012) 225-230 sind bestimmte antimikrobiell wirksame Acylhydrazone bekannt. Die internationalen Patentanmeldungen WO 2012/080088 A1 und WO 2009/124655 A1 betreffen bestimmte Acylhydrazone, diese als Liganden aufweisende Metallkomplexe, und Wasch-, Reinigungs-, Desinfektions- und Bleichmittel, die solche enthalten. Aus der internationalen Patentanmeldung WO 2009/124855 sind Metallkomplexe mit Acylhydrazon-Liganden bekannt, die elektronenziehende Substituenten in der Nähe der Acylgruppe tragen.

Überraschend wurde gefunden, dass sich bei Einsatz der Kombination persauerstoffhaltiger Bleichmittel mit Acylhydrazonen eine deutliche Verstärkung der Desinfektionswirkung von Wasch- und Reinigungsmitteln ergibt.

Gegenstand der Erfindung ist die Verwendung einer Kombination aus persauerstoffhaltigem Bleichmittel mit einem Acylhydrazon der allgemeinen Formel I, 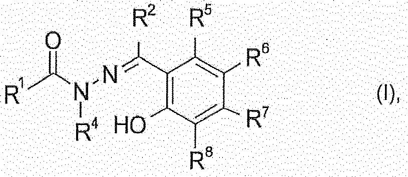 in der R¹ für eine C₁₋₄-Alkylgruppe, die einen Substituenten 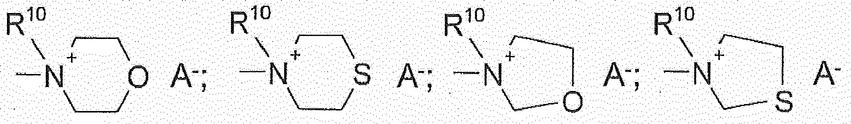 trägt, in dem R¹⁰ für Wasserstoff oder eine C₁₋₂₈-Alkyl-, C₂₋₂₈-Alkenyl-, C₂₋₂₂-Alkinyl-, C₃₋₁₂-Cycloalkyl-, C₃₋₁₂-Cycloalkenyl-, C₇₋₉-Aralkyl-, C₃₋₂₀-Heteroalkyl-, C₃₋₁₂-Cycloheteroalkyl-, C₅₋₁₆-Heteroaralkylgruppe und A⁻ für das Anion einer organischen oder anorganischen Säure steht, R² für Wasserstoff oder eine gegebenenfalls substituierte C₁₋₂₈-Alkyl-,C₂₋₂₈-Alkenyl-, C₂₋₂₂-Alkinyl-, C₃₋₁₂-Cycloalkyl-, C₃₋₁₂-Cycloalkenyl-, C₇₋₉-Aralkyl-, C₃₋₂₈-Heteroalkyl-, C₃₋₁₂-Cycloheteroalkyl-, C₅₋₁₆-Heteroaralkyl-, Phenyl-, Naphthyl- oder Heteroarylgruppe, und
R⁴ für Wasserstoff oder eine C₁₋₂₈-Alkyl-, C₂₋₂₈-Alkenyl-, C₂₋₂₂-Alkinyl-, C₃₋₁₂-Cycloalkyl-, C₃₋₁₂-Cycloalkenyl-, C₇₋₉-Aralkyl-, C₃₋₂₀-Heteroalkyl-, C₃₋₁₂-Cycloheteroalkyl-, C₅₋₁₆-Heteroaralkylgruppe oder eine gegebenenfalls substituierte Phenyl- oder Naphthyl- oder Heteroarylgruppe stehen, R⁵, R⁶, R⁷ und R⁸ unabhängig voneinander für R¹, Wasserstoff, Halogen, eine Hydroxy-, Amino-, eine gegebenenfalls substituierte N-mono-oder di-C₁₋₄-alkyl- oder C₂₋₄-hydroxyalkyl-amino-, N-Phenyl- oder N-Naphthyl-amino-, C₁₋₂₈-Alkyl-, C₁₋₂₈-Alkoxy-, Phenoxy-, C₂₋₂₈-Alkenyl-, C₂₋₂₂-Alkinyl-, C₃₋₁₂-Cycloalkyl-, C₃₋₁₂-Cycloalkenyl-, C₇₋₉-Aralkyl-, C₃₋₂₀-Heteroalkyl-, C₃₋₁₂-Cycloheteroalkyl-, C₅₋₁₆-Heteroaralkyl-, Phenyl- oder Naphthylgruppe stehen, wobei die Substituenten ausgewählt werden aus C₁₋₄-Alkyl-, C₁₋₄-Alkoxy-, Hydroxy-, Sulfo-, Sulfato-, Halogen-, Cyano-, Nitro-, Carboxy-, Phenyl-, Phenoxy-, Naphthoxy-, Amino-, N-mono-oder di-C₁₋₄-alkyl- oder C₂₋₄-hydroxyalkyl-amino-, N-Phenyl- oder N-Naphthyl-aminogruppen, oder
R⁵ und R⁶ oder R⁶ und R⁷ oder R⁷ und R⁸ unter Ausbildung von 1, 2 oder 3 carbocyclischen oder O-, NR¹⁰- oder S-heterocyclischen, gegebenenfalls aromatischen und/oder gegebenenfalls C₁₋₆-alkylsubstituierten Ringen miteinander verbunden sind,
zur Verbesserung der antimikrobiellen Wirksamkeit von Wasch- und Reinigungsmitteln, welches dadurch gekennzeichnet ist man eine unter Perhydrolysebedingungen eine Peroxocarbonsäure ausbildende Verbindung zusammen mit dem Acylhydrazon der allgemeinen Formel (I) einsetzt

Die Acylhydrazone können in E- oder Z-Konfiguration vorliegen; wenn R² Wasserstoff ist, kann die Verbindung der allgemeinen Formel (I) in einer ihrer tautomeren Formen oder als Mischung aus diesen vorliegen.

In den Verbindungen der allgemeinen Formel (I) ist R² vorzugsweise Wasserstoff.. R⁴ ist vorzugsweise Wasserstoff.

Das Anion A⁻ ist vorzugsweise Carboxylat wie Lactat, Citrat, Tartrat oder Succinat, Perchlorat, Tetrafluoroborat, Hexafluorophosphat, Alkylsulfonat, Alkylsulfat, Hydrogensulfat, Sulfat, Dihydrogenphosphat, Hydrogenphosphat, Phosphat, Isocyanat, Rhodanid, Nitrat, Fluorid, Chlorid, Bromid, Hydrogencarbonat oder Carbonat, wobei bei mehrwertigen Anionen der Ladungsausgleich durch die Anwesenheit zusätzlicher Kationen wie Natrium- oder Ammoniumionen erreicht werden kann.

Besonders bevorzugt ist das Acylhydrazon der Formel

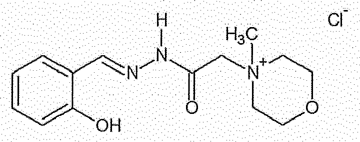

Die Verbindungen der allgemeinen Formel (I) verstärken die desinfizierende Wirkung von Persauerstoffverbindungen, ohne das zu reinigende Textil in unannehmbarer Weise oxidativ zu schädigen. Durch den Einsatz der erfindungswesentlichen Kombination kommt es zur verbesserten Keimentfernung, insbesondere gegenüber Bakterien, Pilzen, Hefen und bakteriellen Sporen sowie Parasiten, Milben und Algen, insbesondere bei niedrigen Waschtemperaturen von unter 60 °C, wie zum Beispiel 40 °C, und schon bei Raumtemperatur.

Vorzugsweise werden als Persauerstoffverbindungen H₂O₂ oder in Wasser H₂O₂ freisetzende Substanzen eingesetzt, zu denen insbesondere Alkaliperborate, Alkalipercarbonate und Harnstoffperhydrat gehören; möglich ist jedoch auch der Einsatz von Peroxocarbonsäuren wie Diperoxodecandicarbonsäure oder Phthalimidopercapronsäure, von anderen Peroxo-Säuren oder peroxo-sauren Salzen, wie Alkalipersulfaten oder -peroxodisulfaten oder Caroaten, oder von Diacylperoxiden oder Tetraacyldiperoxiden.

Die Leistung von Verbindungen der allgemeinen Formel (I) kann gegebenenfalls durch die Anwesenheit von Mangan-, Titan-, Cobalt-, Nickel- oder Kupferionen, vorzugsweise Mn(II)-(III)-(IV)-(V), Cu(I)-(II)-(III), Fe(I)-(II)-(III)-(IV), Co(I)-(II)-(III), Ni(I)-(II)-(III), Ti(II)-(III)-(IV) und besonders bevorzugt solchen ausgewählt aus Mn(II)-(III)-(IV)-(V), Cu(I)-(II)-(III), Fe(I)-(II)-(III)-(IV) und Co(I)-(II)-(III), weiter verstärkt werden; gewünschtenfalls kann das Acylhydrazon auch in Form von Komplexverbindungen der genannten Metallzentralatome mit Liganden der allgemeinen Formel (I) eingesetzt werden.

Ein desinfektionsverstärkender Komplex, der einen Liganden mit einem Gerüst gemäß Formel (I) aufweist, kann den entsprechenden Liganden einmal oder auch mehrfach, insbesondere zweimal, aufweisen. Er kann ein- oder gegebenenfalls zwei- oder mehrkernig sein. Er kann außerdem weitere Neutral-, Anion- oder Kationliganden, wie beispielsweise H₂O, NH₃, CH₃OH, Acetylaceton, Terpyridin, organische Anionen, wie beispielsweise Citrat, Oxalat, Tartrat, Formiat, ein C₂₋₁₈-Carboxylat, ein C₁₋₁₈-Alkylsulfat, insbesondere Methosulfat, oder ein entsprechendes Alkansulfonat, anorganische Anionen, wie beispielsweise Halogenid, insbesondere Chlorid, Perchlorat, Tetrafluoroborat, Hexafluorophosphat, Nitrat, Hydrogensulfat, Hydroxid oder Hydroperoxid. Er kann auch verbrückende Liganden, wie beispielsweise Alkylendiamine, aufweisen.

Im Rahmen der erfindungsgemäßen Verwendung ist bevorzugt, wenn die Konzentration der Verbindung gemäß Formel (I) in der wässrigen Waschflotte, wie sie beispielsweise in Waschmaschinen zum Einsatz kommt, 0,5 µmol/l bis 500 µmol/l, insbesondere 5 µmol/l bis 100 µmol/l beträgt. Vorzugsweise liegt die Konzentration an Mangan-, Titan-, Cobalt-, Nickel- und/oder Kupferionen in der wässrigen Waschflotte im Bereich von 0,05 µmol/l bis 500 µmol/l, insbesondere 1 µmol/l bis 100 µmol/l. Bevorzugte Persauerstoffkonzentrationen (berechnet als H₂O₂) in der Waschflotte liegen im Bereich von 0,001 g/l bis 10 g/l, insbesondere von 0,1 g/l bis 1 g/l und besonders bevorzugt von 0,2 g/l bis 0,5 g/l. Die erfindungsgemäße Verwendung wird vorzugsweise bei Temperaturen im Bereich von 10 °C bis 95 °C, insbesondere 20 °C bis 40 °C und besonders bevorzugt bei Temperaturen unterhalb von 30 °C durchgeführt. Die Wasserhärte des zur Zubereitung der wässrigen Waschflotte zum Einsatz kommenden Wassers liegt vorzugsweise im Bereich von 0°dH bis 21 °dH, insbesondere 0°dH bis 3°dH. In der Waschflotte liegt die Wasserhärte vorzugsweise im Bereich von 0°dH bis 16°dH, insbesondere 0°dH bis 3°dH, was beispielsweise durch den Einsatz üblicher Buildermaterialien oder Wasserenthärter erreicht werden kann. Die erfindungsgemäße Verwendung wird vorzugsweise bei pH-Werten im Bereich von pH 5 bis pH 12, insbesondere von pH 7 bis pH 11 durchgeführt.

Die erfindungsgemäße Verwendung erfolgt vorzugsweise derart, dass man ein Waschmittel, welches ein Acylhydrazon der allgemeinen Formel (I) enthält, im Rahmen eines maschinellen oder mit der Hand ausgeführten Waschvorgangs auf ein verunreinigtes Textil einwirken lässt. Die erfindungsgemäße Verwendung kann besonders einfach durch den Einsatz eines Waschmittels, das Persauerstoffverbindung und eine Verbindung der Formel (I) oder einen durch Komplexbildung mit einem genannten Übergangsmetallion aus dieser zugänglichen Bleichkatalysator enthält, bei der Wäsche reinigungsbedürftiger Textilien realisiert werden. Alternativ kann die Persauerstoffverbindung und/oder die Verbindung der Formel (I) und/oder ein aus dieser zugänglicher Komplex auch separat zu einer Waschflotte, welche ein Waschmittel ohne den jeweils genannten Inhaltstoff aufweist, zugesetzt werden.

Vorzugsweise ist in Waschmitteln 0,01 Gew.-% bis 5 Gew.-%, insbesondere 0,05 Gew.-% bis 0,2 Gew.-% und besonders bevorzugt 0,03 Gew.-% bis 0,09 Gew.-% der Verbindung gemäß Formel (I) enthalten. Insbesondere wenn eine Verbindung Formel (I) enthalten ist, ist bevorzugt, dass das Mittel zusätzlich ein Mangan-, Titan-, Cobalt-, Nickel- oder Kupfer-Salz und/oder einen Mangan-, Titan-, Cobalt-, Nickel- oder Kupfer-Komplex ohne einen Liganden, welcher einer Verbindung gemäß Formel (I) entspricht, enthält. Dann liegt das Molverhältnis des genannten Übergangsmetalls oder der Summe der genannten Übergangsmetalle zu der Verbindung gemäß Formel (I) vorzugsweise im Bereich von 0,001:1 bis 2:1, insbesondere 0,01:1 bis 1:1. In einer weiteren bevorzugten Ausgestaltung der Mittel sind in diesen 0,05 Gew.-% bis 1 Gew.-%, insbesondere 0,1 Gew.-% bis 0,5 Gew.-% an desinfektionsverstärkendem Komplex, der einen Liganden gemäß Formel (I) aufweist, enthalten. Bevorzugtes Übergangsmetall ist Mn.

Als in den Mitteln enthaltene Persauerstoffverbindungen kommen insbesondere organische Persäuren beziehungsweise persaure Salze organischer Säuren, wie Phthalimidopercapronsäure, Perbenzoesäure oder Salze der Diperdodecandisäure, Wasserstoffperoxid und unter den Waschbedingungen Wasserstoffperoxid abgebende anorganische Salze, wie Perborat, Percarbonat und/oder Persilikat, in Betracht. Wasserstoffperoxid kann dabei auch mit Hilfe eines enzymatischen Systems, das heißt einer Oxidase und ihres Substrats, erzeugt werden. Sofern feste Persauerstoffverbindungen eingesetzt werden sollen, können diese in Form von Pulvern oder Granulaten verwendet werden, die auch in im Prinzip bekannter Weise umhüllt sein können. Besonders bevorzugt wird Alkalipercarbonat, Alkaliperborat-Monohydrat, Alkaliperborat-Tetrahydrat oder Wasserstoffperoxid in Form wässriger Lösungen, die 3 Gew.-% bis 10 Gew.-% Wasserstoffperoxid enthalten, eingesetzt. Vorzugsweise sind Persauerstoffverbindungen in Mengen von bis zu 50 Gew.-%, insbesondere von 1 Gew.-% bis 20 Gew.-% und besonders bevorzugt von 7 Gew.-% bis 15 Gew.-%, in Waschmitteln vorhanden.

In einer weiteren bevorzugten Ausgestaltung der Erfindung wird, insbesondere in Gegenwart von H₂O₂ freisetzender Persauerstoffverbindung, ein üblicher Bleichaktivator zusammen mit dem Acylhydrazon der allgemeinen Formel (I) eingesetzt. In Waschmitteln sind Bleichaktivatoren vorzugsweise in Mengen von 0,1 Gew.-% bis 10 Gew.-%, insbesondere von 1 Gew.-% bis 3 Gew.-%, jeweils bezogen auf gesamtes Mittel, enthalten. Vorzugsweise werden unter Perhydrolysebedingungen Peroxocarbonsäure ausbildende Verbindung und Acylhydrazon in Molverhältnissen im Bereich von 4:1 bis 100:1, insbesondere von 25:1 bis 50:1 eingesetzt.

Als unter Perhydrolysebedingungen Peroxocarbonsäure-liefernde Verbindung können insbesondere Verbindungen, die unter Perhydrolysebedingungen gegebenenfalls substituierte Perbenzoesäure und/oder aliphatische Peroxocarbonsäuren mit 1 bis 12 C-Atomen, insbesondere 2 bis 4 C-Atomen ergeben, allein oder in Mischungen, eingesetzt werden. Geeignet sind Bleichaktivatoren, die O- und/oder N-Acylgruppen insbesondere der genannten C-Atomzahl und/oder gegebenenfalls substituierte Benzoylgruppen tragen. Bevorzugt sind mehrfach acylierte Alkylendiamine, insbesondere Tetraacetylethylendiamin (TAED), acylierte Glykolurile, insbesondere Tetraacetylglykoluril (TAGU), acylierte Triazinderivate, insbesondere 1,5-Diacetyl-2,4-dioxohexahydro-1,3,5-triazin (DADHT), N-Acylimide, insbesondere N-Nonanoylsuccinimid (NOSI), acylierte Phenolsulfonate oder -carboxylate beziehungsweise die Sulfon- oder Carbonsäuren von diesen, insbesondere Nonanoyl- oder Isononanoyl- oder Lauroyloxybenzolsulfonat (NOBS beziehungsweise iso-NOBS beziehungsweise LOBS) oder Decanoyloxybenzoat (DOBA), deren formale Kohlensäureesterderivate wie 4-(2-Decanoyloxyethoxycarbonyloxy)-benzolsulfonat (DECOBS), acylierte mehrwertige Alkohole, insbesondere Triacetin, Ethylenglykoldiacetat und 2,5-Diacetoxy-2,5-dihydrofuran sowie acetyliertes Sorbitol und Mannitol und deren Mischungen (SORMAN), acylierte Zuckerderivate, insbesondere Pentaacetylglukose (PAG), Pentaacetylfruktose, Tetraacetylxylose und Octaacetyllactose, acetyliertes, gegebenenfalls N-alkyliertes Glucamin und Gluconolacton, und/oder N-acylierte Lactame, beispielsweise N-Benzoylcaprolactam.

Zusätzlich oder alternativ zu den Verbindungen, die unter Perhydrolysebedingungen Peroxocarbonsäuren bilden, können weitere bleichaktivierende Verbindungen, wie beispielsweise Nitrile, aus denen sich unter Perhydrolysebedingungen Perimidsäuren bilden, vorhanden sein. Dazu gehören insbesondere Aminoacetonitrilderivate mit quaterniertem Stickstoffatom gemäß der Formel 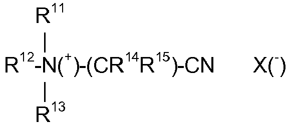 in der R¹¹ für -H, -CH₃, einen C₂₋₂₄-Alkyl- oder -Alkenylrest, einen substituierten C₁₋₂₄-Alkyl- oder C₂₋₂₄-Alkenylrest mit mindestens einem Substituenten aus der Gruppe -Cl, -Br, -OH, -NH₂, -CN und -N⁽⁺⁾-CH₂-CN, einen Alkyl- oder Alkenylarylrest mit einer C₁₋₂₄-Alkylgruppe, oder für einen substituierten Alkyl- oder Alkenylarylrest mit mindestens einer, vorzugsweise zwei, gegebenenfalls substituierten C₁₋₂₄-Alkylgruppe(n) und gegebenenfalls weiteren Substituenten am aromatischen Ring steht, R¹² und R¹³ unabhängig voneinander ausgewählt sind aus -CH₂-CN, -CH₃, -CH₂-CH₃, -CH₂-CH₂-CH₃, -CH(CH₃)-CH₃,-CH₂-OH, -CH₂-CH₂-OH, -CH(OH)-CH₃, -CH₂-CH₂-CH₂-OH, -CH₂-CH(OH)-CH₃, -CH(OH)-CH₂-CH₃, -(CH₂CH₂-O)ₙH mit n = 1, 2, 3, 4, 5 oder 6, R¹⁴ und R¹⁵ unabhängig voneinander eine voranstehend für R¹¹, R¹² oder R¹³ angegebene Bedeutung haben, wobei mindestens 2 der genannten Reste, insbesondere R¹² und R¹³, auch unter Einschluss des Stickstoffatoms und gegebenenfalls weiterer Heteroatome ringschließend miteinander verknüpft sein können und dann vorzugsweise einen Morpholino-Ring ausbilden, und X ein ladungsausgleichendes Anion, vorzugsweise ausgewählt aus Benzolsulfonat, Toluolsulfonat, Cumolsulfonat, den C₉₋₁₅-Alkylbenzolsulfonaten, den C₁₋₂₀-Alkylsulfaten, den C₈₋₂₂-Carbonsäuremethylestersulfonaten, Sulfat, Hydrogensulfat und deren Gemischen, ist, können eingesetzt werden. Auch sauerstoffübertragende Sulfonimine können eingesetzt werden.

Die Bleichaktivatoren können zur Vermeidung der Wechselwirkung mit den Persauerstoffverbindungen bei der Lagerung in bekannter Weise mit Hüllsubstanzen überzogen beziehungsweise granuliert worden sein, wobei mit Hilfe von Carboxymethylcellulose granuliertes Tetraacetylethylendiamin mit mittleren Korngrößen von 0,01 mm bis 0,8 mm, granuliertes 1,5-Diacetyl-2,4-dioxohexahydro-1,3,5-triazin, und/oder in Teilchenform konfektioniertes Trialkylammoniumacetonitril besonders bevorzugt ist.

Zusätzlich zu der erfindungsgemäß zu verwendenden Kombination können auch übliche die Bleiche aktivierende Übergangsmetallkomplexe eingesetzt werden. Diese werden vorzugsweise unter den Cobalt-, Eisen-, Kupfer-, Titan-, Vanadium-, Mangan- und Rutheniumkomplexen ausgewählt. Als Liganden in derartigen Übergangsmetallkomplexen kommen sowohl anorganische als auch organische Verbindungen in Frage, zu denen neben Carboxylaten insbesondere Verbindungen mit primären, sekundären und/oder tertiären Amin- und/oder Alkohol-Funktionen, wie Pyridin, Pyridazin, Pyrimidin, Pyrazin, Imidazol, Pyrazol, Triazol, 2,2'-Bispyridylamin, Tris-(2-pyridylmethyl)amin, 1,4,7-Triazacyclononan und dessen substituierte Derivate wie 1,4,7-Trimethyl-1,4,7-triazacyclononan, 1,5,9-Triazacyclododecan und dessen substituierte Derivate wie 1,5,9-Trimethyl-1,5,9-triazacyclododecan 1,4,8,11-Tetraazacyclotetradecan und dessen substituierte Derivate wie 5,5,7,12,12,14-Hexamethyl-1,4,8,11-tetraazacyclotetradecan, 1,5,8,12-Tetraazabicyclo[6.6.2]hexadecan und dessen substituierte Derivate wie 5,12-Diethyl-1,5,8,12-tetraazabicyclo[6.6.2]hexadecan, (Bis-((1-methylimidazol-2-yl)-methyl))-(2-pyridylmethyl)-amin, N,N'-(Bis-(1-methylimidazol-2-yl)-methyl)-ethylendiamin, N-Bis-(2-benzimidazolylmethyl)-aminoethanol, 2,6-Bis-(bis-(2-benzimidazolylmethyl)aminomethyl)-4-methylphenol, N,N,N',N'-Tetrakis-(2-benzimidazolylmethyl)-2-hydroxy-1,3-diaminopropan, 2,6-Bis-(bis-(2-pyridylmethyl)aminomethyl)-4-methylphenol, 1,3-Bis-(bis-(2-benzimidazolylmethyl)aminomethyl)-benzol, Sorbitol, Mannitol, Erythritol, Adonitol, Inositol, Lactose, und gegebenenfalls substituierte Salene, Porphine und Porphyrine gehören. Zu den anorganischen Neutralliganden gehören insbesondere Ammoniak und Wasser. Falls nicht sämtliche Koordinationsstellen des Übergangsmetallzentralatoms durch Neutralliganden besetzt sind, enthält der Komplex weitere, vorzugsweise anionische und unter diesen insbesondere ein- oder zweizähnige Liganden. Zu diesen gehören insbesondere die Halogenide wie Fluorid, Chlorid, Bromid und lodid, und die (NO₂)⁻-Gruppe, das heißt ein Nitro-Ligand oder ein Nitrito-Ligand. Die (NO₂)⁻-Gruppe kann an ein Übergangsmetall auch chelatbildend gebunden sein oder sie kann zwei Übergangsmetallatome asymmetrisch oder η¹-O-verbrücken. Außer den genannten Liganden können die Übergangsmetallkomplexe noch weitere, in der Regel einfacher aufgebaute Liganden, insbesondere ein- oder mehrwertige Anionliganden, tragen. In Frage kommen beispielsweise Nitrat, Acetat, Trifluoracetat, Formiat, Carbonat, Citrat, Oxalat, Perchlorat sowie komplexe Anionen wie Hexafluorophosphat. Die Anionliganden sollen für den Ladungsausgleich zwischen Übergangsmetall-Zentralatom und dem Ligandensystem sorgen. Auch die Anwesenheit von Oxo-Liganden, Peroxo-Liganden und Imino-Liganden ist möglich. Insbesondere derartige Liganden können auch verbrückend wirken, so dass mehrkernige Komplexe entstehen. Im Falle verbrückter, zweikerniger Komplexe müssen nicht beide Metallatome im Komplex gleich sein. Auch der Einsatz zweikerniger Komplexe, in denen die beiden Übergangsmetallzentralatome unterschiedliche Oxidationszahlen aufweisen, ist möglich. Falls Anionliganden fehlen oder die Anwesenheit von Anionliganden nicht zum Ladungsausgleich im Komplex führt, sind in den gemäß der Erfindung zu verwendenden Übergangsmetallkomplex-Verbindungen anionische Gegenionen anwesend, die den kationischen Übergangsmetall-Komplex neutralisieren. Zu diesen anionischen Gegenionen gehören insbesondere Nitrat, Hydroxid, Hexafluorophosphat, Sulfat, Chlorat, Perchlorat, die Halogenide wie Chlorid oder die Anionen von Carbonsäuren wie Formiat, Acetat, Oxalat, Benzoat oder Citrat. Beispiele für einsetzbare Übergangsmetallkomplex-Verbindungen sind Mn(IV)₂(µ-O)₃(1,4,7-trimethyl-1,4,7-triazacyclononan)-di-hexafluorophosphat, [N,N'-Bis[(2-hydroxy-5-vinylphenyl)-methylen]-1,2-diaminocyclohexan]-mangan-(III)-chlorid, [N,N'-Bis[(2-hydroxy-5-nitrophenyl)-methylen]-1,2-diaminocyclohexan]-mangan-(III)-acetat, [N,N'-Bis[(2-hydroxyphenyl)-methylen]-1,2-phenylendiamin]-mangan-(III)-acetat, [N,N'-Bis[(2-hydroxyphenyl)-methylen]-1,2-diaminocyclohexan]-mangan-(III)-chlorid, [N,N'-Bis[(2-hydroxyphenyl)-methylen]-1,2-diaminoethan]-mangan-(III)-chlorid, [N,N'-Bis[(2-hydroxy-5-sulfonatophenyl)-methylen]-1,2-diaminoethan]-mangan-(III)-chlorid, Manganoxalatokomplexe, Nitropentammin-cobalt(III)-chlorid, Nitritopentammin-cobalt(III)-chlorid, Hexammincobalt(III)-chlorid, Chloropentammin-cobalt(III)-chlorid sowie der Peroxo-Komplex [(NH₃)₅Co-O-O-Co(NH₃)₅]Cl₄.

Waschmittel, die als insbesondere pulverförmige Feststoffe, in nachverdichteter Teilchenform, als homogene Lösungen oder Suspensionen vorliegen können, können außer der erfindungsgemäß zu verwendenden Kombination aus Persauerstoffverbindung und Verbindung gemäß Formel (I) sowie den genannten Bleichaktivatoren und -katalysatoren im Prinzip alle bekannten und in derartigen Mitteln üblichen Inhaltsstoffe enthalten. Die Mittel können insbesondere Buildersubstanzen, oberflächenaktive Tenside, wassermischbare organische Lösungsmittel, Enzyme, Sequestrierungsmittel, Elektrolyte, pH-Regulatoren, Polymere mit Spezialeffekten, wie soil release-Polymere, Farbübertragungsinhibitoren, Vergrauungsinhibitoren, knitterreduzierende polymere Wirkstoffe und formerhaltende polymere Wirkstoffe, und weitere Hilfsstoffe, wie optische Aufheller, Schaumregulatoren, Farb- und Duftstoffe, enthalten.

Ein Mittel kann zur weiteren Verstärkung der Desinfektionswirkung, beispielsweise gegenüber speziellen Keimen, zusätzlich übliche antimikrobielle Wirkstoffe, wie beispielsweise Alkohole, Aldehyde, Säuren, Carbonsäureester, Säureamide, Phenole und Phenolderivate, Diphenyle, Diphenylalkane, Harnstoffderivate, an organische Gerüste gebundene O-Acetate und O-Formale, Benzamidine, Isothiazoline, Phthalimidderivate, Pyridinderivate, Amine, quaternäre Ammoniumverbindungen, Guanidine, amphotere Verbindungen, Chinoline, Benzimidazole, IPBC, Dithiocarbamate, Metalle und Metallverbindungen, wie zum Beispiel Silber und Silbersalze, Halogene, wie zum Beispiel Chlor, Iod und deren Verbindungen, weitere Oxidationsmittel sowie anorganische Stickstoffverbindungen, enthalten. Derartige antimikrobielle Zusatzstoffe sind vorzugsweise in Mengen bis zu 10 Gew.-%, insbesondere von 0,01 Gew.-% bis 5 Gew.-%, jeweils bezogen auf gesamtes Mittel, enthalten; in bevorzugter Ausgestaltung sind sie jedoch frei von solchen zusätzlichen Desinfektionswirkstoffen.

Die Mittel können ein oder mehrere Tenside enthalten, wobei insbesondere anionische Tenside, nichtionische Tenside und deren Gemische in Frage kommen, aber auch kationische und/oder amphotere Tenside enthalten sein können. Geeignete nichtionische Tenside sind insbesondere Alkylglykoside und Ethoxylierungs- und/oder Propoxylierungsprodukte von Alkylglykosiden oder linearen oder verzweigten Alkoholen mit jeweils 12 bis 18 C-Atomen im Alkylteil und 3 bis 20, vorzugsweise 4 bis 10 Alkylethergruppen. Weiterhin sind entsprechende Ethoxylierungs- und/oder Propoxylierungsprodukte von N-Alkyl-aminen, vicinalen Diolen, Fettsäureestern und Fettsäureamiden, die hinsichtlich des Alkylteils den genannten langkettigen Alkoholderivaten entsprechen, sowie von Alkylphenolen mit 5 bis 12 C-Atomen im Alkylrest brauchbar.

Geeignete anionische Tenside sind insbesondere Seifen und solche, die Sulfat- oder SulfonatGruppen mit bevorzugt Alkaliionen als Kationen enthalten. Verwendbare Seifen sind bevorzugt die Alkalisalze der gesättigten oder ungesättigten Fettsäuren mit 12 bis 18 C-Atomen. Derartige Fettsäuren können auch in nicht vollständig neutralisierter Form eingesetzt werden. Zu den brauchbaren Tensiden des Sulfat-Typs gehören die Salze der Schwefelsäurehalbester von Fettalkoholen mit 12 bis 18 C-Atomen und die Sulfatierungsprodukte der genannten nichtionischen Tenside mit niedrigem Ethoxylierungsgrad. Zu den verwendbaren Tensiden vom Sulfonat-Typ gehören lineare Alkylbenzolsulfonate mit 9 bis 14 C-Atomen im Alkylteil, Alkansulfonate mit 12 bis 18 C-Atomen, sowie Olefinsulfonate mit 12 bis 18 C-Atomen, die bei der Umsetzung entsprechender Monoolefine mit Schwefeltrioxid entstehen, sowie alpha-Sulfofettsäureester, die bei der Sulfonierung von Fettsäuremethyl- oder -ethylestern entstehen.

Derartige Tenside sind in Waschmitteln in Mengenanteilen von vorzugsweise 5 Gew.-% bis 50 Gew.-%, insbesondere von 8 Gew.-% bis 30 Gew.-%, enthalten,

Ein Waschmittel enthält vorzugsweise mindestens einen wasserlöslichen und/oder wasserunlöslichen, organischen und/oder anorganischen Builder. Zu den wasserlöslichen organischen Buildersubstanzen gehören Polycarbonsäuren, insbesondere Citronensäure und Zuckersäuren, monomere und polymere Aminopolycarbonsäuren, insbesondere Glycindiessigsäure, Methylglycindiessigsäure, Nitrilotriessigsäure, Iminodisuccinate wie Ethylendiamin-N,N'-dibernsteinsäure und Hydroxyiminodisuccinate, Ethylendiamintetraessigsäure sowie Polyasparaginsäure, Polyphosphonsäuren, insbesondere Aminotris(methylenphosphonsäure), Ethylendiamintetrakis(methylenphosphonsäure), Lysintetra(methylenphosphosäure) und 1-Hydroxyethan-1,1-diphosphonsäure, polymere Hydroxyverbindungen wie Dextrin sowie polymere (Poly-)carbonsäuren, insbesondere durch Oxidation von Polysacchariden zugängliche Polycarboxylate, polymere Acrylsäuren, Methacrylsäuren, Maleinsäuren und Mischpolymere aus diesen, die auch geringe Anteile polymerisierbarer Substanzen ohne Carbonsäurefunktionalität einpolymerisiert enthalten können. Die relative mittlere Molekülmasse (hier und im Folgenden: Gewichtsmittel) der Homopolymeren ungesättiger Carbonsäuren liegt im allgemeinen zwischen 5 000 g/mol und 200 000 g/mol, die der Copolymeren zwischen 2 000 g/mol und 200 000 g/mol, vorzugsweise 50 000 g/mol bis 120 000 g/mol, jeweils bezogen auf freie Säure. Ein besonders bevorzugtes Acrylsäure-Maleinsäure-Copolymer weist eine relative mittlere Molekülmasse von 50 000 bis 100 000 auf. Geeignete, wenn auch weniger bevorzugte Verbindungen dieser Klasse sind Copolymere der Acrylsäure oder Methacrylsäure mit Vinylethern, wie Vinylmethylethern, Vinylester, Ethylen, Propylen und Styrol, in denen der Anteil der Säure mindestens 50 Gew.-% beträgt. Als wasserlösliche organische Buildersubstanzen können auch Terpolymere eingesetzt werden, die als Monomere zwei ungesättigte Säuren und/oder deren Salze sowie als drittes Monomer Vinylalkohol und/ oder ein Vinylalkohol-Derivat oder ein Kohlenhydrat enthalten. Das erste saure Monomer beziehungsweise dessen Salz leitet sich von einer monoethylenisch ungesättigten C₃-C₈-Carbonsäure und vorzugsweise von einer C₃-C₄-Monocarbonsäure, insbesondere von (Meth)-acrylsäure ab. Das zweite saure Monomer beziehungsweise dessen Salz kann ein Derivat einer C₄-C₈-Dicarbonsäure sein, wobei Maleinsäure besonders bevorzugt ist. Die dritte monomere Einheit wird in diesem Fall von Vinylalkohol und/oder vorzugsweise einem veresterten Vinylalkohol gebildet. Insbesondere sind Vinylalkohol-Derivate bevorzugt, welche einen Ester aus kurzkettigen Carbonsäuren, beispielsweise von C₁-C₄-Carbonsäuren, mit Vinylalkohol darstellen. Bevorzugte Polymere enthalten dabei 60 Gew.-% bis 95 Gew.-%, insbesondere 70 Gew.-% bis 90 Gew.-% (Meth)acrylsäure bzw. (Meth)acrylat, besonders bevorzugt Acrylsäure bzw. Acrylat, und Maleinsäure bzw. Maleinat sowie 5 Gew.-% bis 40 Gew.-%, vorzugsweise 10 Gew.-% bis 30 Gew.-% Vinylalkohol und/oder Vinylacetat. Ganz besonders bevorzugt sind dabei Polymere, in denen das Gewichtsverhältnis von (Meth)acrylsäure beziehungsweise (Meth)acrylat zu Maleinsäure beziehungsweise Maleinat zwischen 1:1 und 4:1, vorzugsweise zwischen 2:1 und 3:1 und insbesondere 2:1 und 2,5:1 liegt. Dabei sind sowohl die Mengen als auch die Gewichtsverhältnisse auf die Säuren bezogen. Das zweite saure Monomer beziehungsweise dessen Salz kann auch ein Derivat einer Allylsulfonsäure sein, die in 2-Stellung mit einem Alkylrest, vorzugsweise mit einem C₁-C₄-Alkylrest, oder einem aromatischen Rest, der sich vorzugsweise von Benzol oder Benzol-Derivaten ableitet, substituiert ist. Bevorzugte Terpolymere enthalten dabei 40 Gew.-% bis 60 Gew.-%, insbesondere 45 bis 55 Gew.-% (Meth)acrylsäure beziehungsweise (Meth)acrylat, besonders bevorzugt Acrylsäure beziehungsweise Acrylat, 10 Gew.-% bis 30 Gew.-%, vorzugsweise 15 Gew.-% bis 25 Gew.-% Methallylsulfonsäure bzw. Methallylsulfonat und als drittes Monomer 15 Gew.-% bis 40 Gew.-%, vorzugsweise 20 Gew.-% bis 40 Gew.-% eines Kohlenhydrats. Dieses Kohlenhydrat kann dabei beispielsweise ein Mono-, Di-, Oligo- oder Polysaccharid sein, wobei Mono-, Di- oder Oligosaccharide bevorzugt sind. Besonders bevorzugt ist Saccharose. Durch den Einsatz des dritten Monomers werden vermutlich Sollbruchstellen in das Polymer eingebaut, die für die gute biologische Abbaubarkeit des Polymers verantwortlich sind. Diese Terpolymere weisen im Allgemeinen eine relative mittlere Molekülmasse zwischen 1 000 g/mol und 200 000 g/mol, vorzugsweise zwischen 200 g/mol und 50 000 g/mol auf. Weitere bevorzugte Copolymere sind solche, die als Monomere Acrolein und Acrylsäure/Acrylsäuresalze beziehungsweise Vinylacetat aufweisen. Die organischen Buildersubstanzen können, insbesondere zur Herstellung flüssiger Mittel, in Form wässriger Lösungen, vorzugsweise in Form 30- bis 50-gewichtsprozentiger wässriger Lösungen eingesetzt werden. Alle genannten Säuren werden in der Regel in Form ihrer wasserlöslichen Salze, insbesondere ihre Alkalisalze, eingesetzt.

Derartige organische Buildersubstanzen können gewünschtenfalls in Mengen bis zu 40 Gew.-%, insbesondere bis zu 25 Gew.-% und vorzugsweise von 1 Gew.-% bis 8 Gew.-% enthalten sein. Mengen nahe der genannten Obergrenze werden vorzugsweise in pastenförmigen oder flüssigen, insbesondere wasserhaltigen, Mitteln eingesetzt.

Als wasserlösliche anorganische Buildermaterialien kommen insbesondere Polyphosphate, vorzugsweise Natriumtriphosphat, in Betracht. Als wasserunlösliche anorganische Buildermaterialien werden insbesondere kristalline oder amorphe, wasserdispergierbare Alkalialumosilikate, in Mengen nicht über 25 Gew.-%, vorzugsweise von 3 Gew.-% bis 20 Gew.-% und insbesondere in Mengen von 5 Gew.-% bis 15 Gew.-% eingesetzt. Unter diesen sind die kristallinen Natriumalumosilikate in Waschmittelqualität, insbesondere Zeolith A, Zeolith P sowie Zeolith MAP und gegebenenfalls Zeolith X, bevorzugt. Mengen nahe der genannten Obergrenze werden vorzugsweise in festen, teilchenförmigen Mitteln eingesetzt. Geeignete Alumosilikate weisen insbesondere keine Teilchen mit einer Korngröße über 30 µm auf und bestehen vorzugsweise zu wenigstens 80 Gew.-% aus Teilchen mit einer Größe unter 10 µm. Ihr Calciumbindevermögen liegt in der Regel im Bereich von 100 bis 200 mg CaO pro Gramm.

Zusätzlich oder alternativ zum genannten wasserunlöslichen Alumosilikat und Alkalicarbonat können weitere wasserlösliche anorganische Buildermaterialien enthalten sein. Zu diesen gehören neben den Polyphosphaten wie Natriumtriphosphat insbesondere die wasserlöslichen kristallinen und/oder amorphen Alkalisilikat-Builder. Derartige wasserlösliche anorganische Buildermaterialien sind in den Mitteln vorzugsweise in Mengen von 1 Gew.-% bis 20 Gew.-%, insbesondere von 5 Gew.-% bis 15 Gew.-% enthalten. Die als Buildermaterialien brauchbaren Alkalisilikate weisen vorzugsweise ein molares Verhältnis von Alkalioxid zu SiO₂ unter 0,95, insbesondere von 1:1,1 bis 1:12 auf und können amorph oder kristallin vorliegen. Bevorzugte Alkalisilikate sind die Natriumsilikate, insbesondere die amorphen Natriumsilikate, mit einem molaren Verhältnis Na₂O:SiO₂ von 1:2 bis 1:2,8. Als kristalline Silikate, die allein oder im Gemisch mit amorphen Silikaten vorliegen können, werden vorzugsweise kristalline Schichtsilikate der allgemeinen Formel Na₂SiₓO₂ₓ₊₁ · y H₂O eingesetzt, in der x, das sogenannte Modul, eine Zahl von 1,9 bis 4 und y eine Zahl von 0 bis 20 ist und bevorzugte Werte für x 2,3 oder 4 sind. Bevorzugte kristalline Schichtsilikate sind solche, bei denen x in der genannten allgemeinen Formel die Werte 2 oder 3 annimmt. Insbesondere sind sowohl ß- als auch δ-Natriumdisitikate (Na₂Si₂O₅ · y H₂O) bevorzugt. Auch aus amorphen Alkalisilikaten hergestellte, praktisch wasserfreie kristalline Alkalisilikate der obengenannten allgemeinen Formel, in der x eine Zahl von 1,9 bis 2,1 bedeutet, können in den Mitteln eingesetzt werden. In einer weiteren bevorzugten Ausführungsform wird ein kristallines Natriumschichtsilikat mit einem Modul von 2 bis 3 eingesetzt, wie es aus Sand und Soda hergestellt werden kann. Natriumsilikate mit einem Modul im Bereich von 1,9 bis 3,5 werden in einer weiteren Ausführungsform eingesetzt. In einer bevorzugten Ausgestaltung solcher Mittel setzt man ein granulares Compound aus Alkalisilikat und Alkalicarbonat ein, wie es zum Beispiel unter dem Namen Nabion® 15 im Handel erhältlich ist.

Als in den Waschmitteln gegebenenfalls enthaltene Enzyme kommen insbesondere solche aus der Klasse der Proteasen, Lipasen, Cutinasen, Amylasen, Pullulanasen, Xylanasen, Hemicellulasen, Cellulasen, Peroxidasen sowie Oxidasen beziehungsweise deren Gemische in Frage, wobei der Einsatz von Protease, Amylase, Lipase und/oder Cellulase besonders bevorzugt ist. Der Anteil beträgt vorzugsweise 0,2 Gew.-% bis 1,5 Gew.-%, insbesondere 0,5 Gew.-% bis 1 Gew.-%. Die Enzyme können in üblicher Weise an Trägerstoffen adsorbiert und/oder in Hüllsubstanzen eingebettet sein oder als konzentrierte, möglichst wasserfreie Flüssigformulierungen eingearbeitet werden.

Geeignete Vergrauungsinhibitoren beziehungsweise soil-release-Wirkstoffe sind Celluloseether, wie Carboxymethylcellulose, Methylcellulose, Hydroxyalkylcellulosen und Cellulosemischether, wie Methylhydroxyethylcellulose, Methylhydroxypropylcellulose und Methyl-Carboxymethylcellulose. Vorzugsweise werden Natrium-Carboxymethylcellulose und deren Gemische mit Methylcellulose eingesetzt. Zu den üblicherweise eingesetzten Soil-release-Wirkstoffen gehören Copolyester, die Dicarbonsäureeinheiten, Alkylenglykoleinheiten und Polyalkylenglykoleinheiten enthalten. Der Anteil an Vergrauungsinhibitoren und/oder soil-release-Wirkstoffen in den Mitteln liegt im allgemeinen nicht über 2 Gew.-% und beträgt vorzugsweise 0,5 Gew.-% bis 1,5 Gew.-%.

Als optische Aufheller für insbesondere Textilien aus Cellulosefasern (zum Beispiel Baumwolle) können in Waschmitteln beispielsweise Derivate der Diaminostilbendisulfonsäure beziehungsweise deren Alkalimetallsalze enthalten sein. Geeignet sind zum Beispiel Salze der 4,4'-Bis(2-anilino-4-morpholino-1,3,5-triazin-6-yl-amino)-stilben-2,2'-disulfonsäure oder gleichartig aufgebaute Verbindungen, die anstelle der Morpholinogruppe eine Diethanolaminogruppe, eine Methylaminogruppe oder eine 2-Methoxyethylaminogruppe tragen. Weiterhin können Aufheller vom Typ des substituierten 4,4'-Distyryl-diphenyl anwesend sein, zum Beispiel 4,4'-Bis-(4-chlor-3-sulfostyryl)-diphenyl. Auch Gemische von Aufhellern können verwendet werden. Für Polyamidfasern eignen sich besonders gut Aufheller vom Typ der 1,3-Diaryl-2-pyrazoline, beispielsweise 1-(p-Sulfoamoylphenyl)-3-(p-chlorphenyl)-2-pyrazolin sowie gleichartig aufgebaute Verbindungen. Der Gehalt des Mittels an optischen Aufhellern beziehungsweise Aufhellergemischen liegt im allgemeinen nicht über 1 Gew.-% und vorzugsweise im Bereich von 0,05 Gew.-% bis 0,5 Gew.-%.

Zu den in Waschmitteln einsetzbaren üblichen Schaumregulatoren gehören beispielsweise Polysiloxan-Kieselsäure-Gemische, wobei die darin enthaltene feinteilige Kieselsäure vorzugsweise silaniert oder anderweitig hydrophobiert ist. Die Polysiloxane können sowohl aus linearen Verbindungen wie auch aus vernetzten Polysiloxan-Harzen sowie aus deren Gemischen bestehen. Weitere Entschäumer sind Paraffinkohlenwasserstoffe, insbesondere Mikroparaffine und Paraffinwachse, deren Schmelzpunkt oberhalb 40 °C liegt, gesättigte Fettsäuren beziehungsweise Seifen mit insbesondere 20 bis 22 C-Atomen, zum Beispiel Natriumbehenat, und Alkalisalze von Phosphorsäuremono- und/oder -dialkylestern, in denen die Alkylketten jeweils 12 bis 22 C-Atome aufweisen. Unter diesen wird bevorzugt Natriummonoalkylphosphat und/oder -dialkylphosphat mit C₁₆- bis C₁₈-Alkylgruppen eingesetzt. Der Anteil der Schaumregulatoren kann vorzugsweise 0,2 Gew.-% bis 2 Gew.-% betragen.

Die Mittel können Wasser als Lösungsmittel enthalten. Zu den in den Mitteln, insbesondere wenn sie in flüssiger oder pastöser Form vorliegen, verwendbaren organischen Lösungsmitteln gehören Alkohole mit 1 bis 4 C-Atomen, insbesondere Methanol, Ethanol, Isopropanol und tert.-Butanol, Diole mit 2 bis 4 C-Atomen, insbesondere Ethylenglykol und Propylenglykol, sowie deren Gemische und die aus den genannten Verbindungsklassen ableitbaren Ether. Derartige wassermischbare Lösungsmittel sind in den Mitteln in Mengen von vorzugsweise nicht über 20 Gew.-%, insbesondere von 1 Gew.-% bis 15 Gew.-%, vorhanden.

Zur Einstellung eines gewünschten, sich durch die Mischung der übrigen Komponenten nicht von selbst ergebenden pH-Werts können die Mittel system- und umweltverträgliche Säuren, insbesondere Citronensäure, Essigsäure, Weinsäure, Äpfelsäure, Milchsäure, Glykolsäure, Bernsteinsäure, Glutarsäure und/oder Adipinsäure, aber auch Mineralsäuren, insbesondere Schwefelsäure oder Alkalihydrogensulfate, oder Basen, insbesondere Ammonium- oder Alkalihydroxide, enthalten. Derartige pH-Regulatoren sind vorzugsweise nicht über 10 Gew.-%, insbesondere von 0,5 Gew.-% bis 6 Gew.-%, enthalten.

Die Herstellung fester Mittel bietet keine Schwierigkeiten und kann in im Prinzip bekannter Weise, zum Beispiel durch Sprühtrocknen oder Granulation, erfolgen, wobei thermisch empfindliche Inhaltsstoffe gegebenenfalls später getrennt zugesetzt werden.

Mittel in Form wässriger oder sonstige übliche Lösungsmittel enthaltender Lösungen werden besonders vorteilhaft durch einfaches Mischen der Inhaltsstoffe, die in Substanz oder als Lösung in einen automatischen Mischer gegeben werden können, hergestellt.

Die Mittel liegen vorzugsweise als pulverförmige, granulare oder tablettenförmige Präparate vor, die in an sich bekannter Weise, beispielsweise durch Mischen, Granulieren, Walzenkompaktieren und/oder durch Sprühtrocknung der thermisch belastbaren Komponenten und Zumischen der empfindlicheren Komponenten, zu denen insbesondere Enzyme, Bleichmittel und bleichaktivierende Wirkstoffe zu rechnen sind, hergestellt werden können. Zur Herstellung von Mitteln mit erhöhtem Schüttgewicht, insbesondere im Bereich von 650 g/l bis 950 g/l, ist ein einen Extrusionschritt aufweisendes Verfahren bevorzugt.

Zur Herstellung von Mitteln in Tablettenform geht man vorzugsweise derart vor, dass man alle Bestandteile in einem Mischer miteinander vermischt und das Gemisch mittels herkömmlicher Tablettenpressen, beispielsweise Exzenterpressen oder Rundläuferpressen, mit Pressdrucken im Bereich von 200 · 10⁵ Pa bis 1 500 · 10⁵ Pa verpresst. Man erhält so problemlos bruchfeste und dennoch unter Anwendungsbedingungen ausreichend schnell lösliche Tabletten mit Biegefestigkeit von normalerweise über 150 N. Vorzugsweise weist eine derart hergestellte Tablette ein Gewicht von 15g bis 40 g, insbesondere von 20 g bis 30 g auf, bei einem Durchmesser von 35 mm bis 40 mm.

### Beispiele

Die antibakterielle Wirksamkeit einer 3,77 g/l eines bleichmittel-, bleichaktivator- und biozidfreien Waschmittels enthaltenden Lösung (V1), einer ansonsten gleich zusammengesetzten Lösung, die zusätzlich 1,76 g/l (berechnet als 100%ige Substanz) Natriumpercarbonat enthielt (V2), einer ansonsten wie V2 zusammengesetzten Lösung, die zusätzlich 0,49 g/l TAED enthielt (V3), und zweier ansonsten wie V3 zusammengesetzter Lösungen, die zusätzlich 0,024 g/l (E1) oder 0,007 g/l (E2) Morpholinium-4-(2-(2-((2-Hydroxyphenylmethyl)-methylen)-hydrazinyl)-2-oxoethyl)-4-methylchlorid enthielten, sowie einer ansonsten wie V1 zusammengesetzten Lösung, die zusätzlich 0,024 g/l Morpholinium-4-(2-(2-((2-Hydroxyphenylmethyl)-methylen)-hydrazinyl)-2-oxoethyl)-4-methyl-chlorid enthielt (V4), wurden in einem MPN-Suspensionstest bei den in der nachfolgenden Tabelle 1 angegebenen Temperaturen gegenüber Staphylococcus aureus (DSM799; Ausgangskeimzahl: 4,1E+09; Inkubationszeit: 5 Minuten) getestet. In der nachfolgenden Tabelle 1 ist die Reduktion der Lebendzellzahl des Prüfstammes angegeben.

**Tabelle 1: Reduktion der Lebendzellzahl (Staphylococcus aureus)**

| | 20 °C | 40 °C |
|---|---|---|
| V1 | 0,0E+00 | 1,0E+01 |
| V2 | 2,4E+01 | 3,0E+01 |
| V3 | 4,4E+02 | 1,0E+01 |
| V4 | 4,4E+00 | 6,0E+01 |
| E1 | > 1,1E+05 | 6,0E+03 |
| E2 | 7,3E+04 | > 4,5E+04 |

## Patentansprüche

1. Verwendung einer Kombination aus persauerstoffhaltigem Bleichmittel mit einem Acylhydrazon der allgemeinen Formel I, 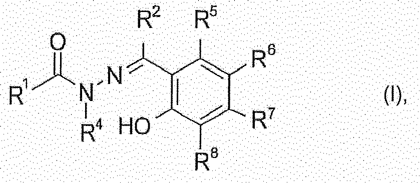 in der R¹ für eine C₁₋₄-Alkylgruppe, die einen Substituenten 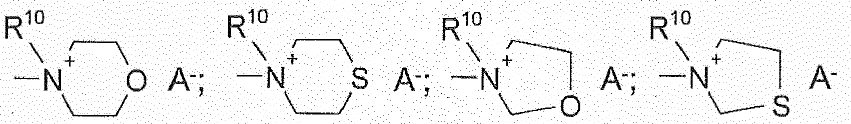
trägt, in dem R¹⁰ für Wasserstoff oder eine C₁₋₂₈-Alkyl-, C₂₋₂₈-Alkenyl-, C₂₋₂₂-Alkinyl-, C₃₋₁₂-Cycloalkyl-, C₃₋₁₂-Cycloalkenyl-, C₇₋₉-Aralkyl-, C₃₋₂₀-Heteroalkyl-, C₃₋₁₂-Cycloheteroalkyl-, C₅₋₁₆-Heteroaralkylgruppe und A⁻ für das Anion einer organischen oder anorganischen Säure steht, R² für Wasserstoff oder eine gegebenenfalls substituierte C₁₋₂₈-Alkyl-,C₂₋₂₈-Alkenyl-, C₂₋₂₂-Alkinyl-, C₃₋₁₂-Cycloalkyl-, C₃₋₁₂-Cycloalkenyl-, C₇₋₉-Aralkyl-, C₃₋₂₈-Heteroalkyl-, C₃₋₁₂-Cycloheteroalkyl-, C₅₋₁₆-Heteroaralkyl-, Phenyl-, Naphthyl- oder Heteroarylgruppe, und
R⁴ für Wasserstoff oder eine C₁₋₂₈-Alkyl-, C₂₋₂₈-Alkenyl-, C₂₋₂₂-Alkinyl-, C₃₋₁₂-Cycloalkyl-, C₃₋₁₂-Cycloalkenyl-, C₇₋₉-Aralkyl-, C₃₋₂₀-Heteroalkyl-, C₃₋₁₂-Cycloheteroalkyl-, C₅₋₁₆-Heteroaralkylgruppe oder eine gegebenenfalls substituierte Phenyl- oder Naphthyl- oder Heteroarylgruppe stehen,
R⁵, R⁶, R⁷ und R⁸ unabhängig voneinander für R¹, Wasserstoff, Halogen, eine Hydroxy-, Amino-, eine gegebenenfalls substituierte N-mono-oder di-C₁₋₄-alkyl- oder C₂₋₄-hydroxyalkyl-amino-, N-Phenyl- oder N-Naphthyl-amino-, C₁₋₂₈-Alkyl-, C₁₋₂₈-Alkoxy-, Phenoxy-, C₂₋₂₈-Alkenyl-, C₂₋₂₂-Alkinyl-, C₃₋₁₂-Cycloalkyl-, C₃₋₁₂-Cycloalkenyl-, C₇₋₉-Aralkyl-, C₃₋₂₀-Heteroalkyl-, C₃₋₁₂-Cycloheteroalkyl-, C₅₋₁₆-Heteroaralkyl-, Phenyl- oder Naphthylgruppe stehen, wobei die Substituenten ausgewählt werden aus C₁₋₄-Alkyl-, C₁₋₄-Alkoxy-, Hydroxy-, Sulfo-, Sulfato-, Halogen-, Cyano-, Nitro-, Carboxy-, Phenyl-, Phenoxy-, Naphthoxy-, Amino-, N-mono-oder di-C₁₋₄-alkyl- oder C₂₋₄-hydroxyalkyl-amino-, N-Phenyl- oder N-Naphthyl-aminogruppen, oder
R⁵ und R⁶ oder R⁶ und R⁷ oder R⁷ und R⁸ unter Ausbildung von 1, 2 oder 3 carbocyclischen oder O-, NR¹⁰- oder S-heterocyclischen, gegebenenfalls aromatischen und/oder gegebenenfalls C₁₋₆-alkylsubstituierten Ringen miteinander verbunden sind,
zur Verbesserung der antimikrobiellen Wirksamkeit von Wasch- und Reinigungsmitteln, **dadurch gekennzeichnet, dass** man eine unter Perhydrolysebedingungen eine Peroxocarbonsäure ausbildende Verbindung zusammen mit dem Acylhydrazon der allgemeinen Formel (I) einsetzt.

2. Verwendung nach Anspruch 1, **dadurch gekennzeichnet, dass** man ein Waschmittel, welches ein Acylhydrazon der allgemeinen Formel (I) enthält, im Rahmen eines maschinellen oder mit der Hand ausgeführten Waschvorgangs auf ein verunreinigtes Textil einwirken lässt.

3. Verwendung nach Anspruch 2, **dadurch gekennzeichnet, dass** das Mittel 0,01 Gew.-% bis 5 Gew.-%, insbesondere 0,05 Gew.-% bis 0,2 Gew.-% der Verbindung gemäß Formel (I) enthält.

4. Verwendung nach einem der Ansprüche 1 bis 3, **dadurch gekennzeichnet, dass** das Acylhydrazon der allgemeinen Formel (I) in Gegenwart von H₂O₂ oder in Wasser H₂O₂ freisetzenden Substanzen eingesetzt wird.

5. Verwendung nach einem der Ansprüche 1 bis 4, **dadurch gekennzeichnet, dass** das Acylhydrazon der allgemeinen Formel (I) in Anwesenheit von Mangan-, Titan-, Cobalt-, Nickel- oder Kupferionen eingesetzt wird.

6. Verwendung nach einem der Ansprüche 1 bis 5, **dadurch gekennzeichnet, dass** die Konzentration der Verbindung gemäß Formel (I) in der wässrigen Waschflotte 0,5 µmol/l bis 500 µmol/l, insbesondere 5 µmol/l bis 100 µmol/l beträgt.

7. Verwendung nach einem der Ansprüche 1 bis 6, **dadurch gekennzeichnet, dass** die Persauerstoffkonzentration (berechnet als H₂O₂) in der Waschflotte im Bereich von 0,001 g/l bis 10 g/l, insbesondere von 0,1 g/l bis 1 g/l und besonders bevorzugt von 0,2 g/l bis 0,5 g/l liegt.

8. Verwendung nach einem der Ansprüche 1 bis 7, **dadurch gekennzeichnet, dass** man das Acylhydrazon in Form von Komplexverbindungen von Mangan-, Titan-, Cobalt-, Nickel- oder Kupferzentralatomen mit Liganden der allgemeinen Formel (I) einsetzt.

## Claims

1. The use of a combination of peroxygenated bleaching agent and an acyl hydrazone of general formula I, 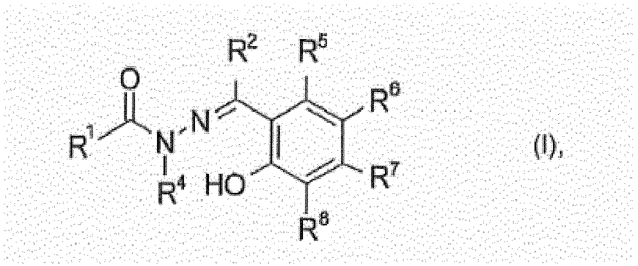 in which R¹ is a C₁₋₄ alkyl group that bears a substituent 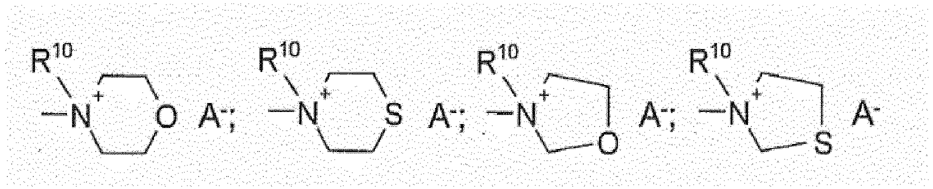
in which R¹⁰ represents hydrogen or a C₁₋₂₈ alkyl, C₂₋₂₈ alkenyl, C₂₋₂₂ alkynyl, C₃₋₁₂ cycloalkyl, C₃₋₁₂ cycloalkenyl, C₇₋₉ aralkyl, C₃₋₂₀ heteroalkyl, C₃₋₁₂ cycloheteroalkyl, C₅₋₁₆ heteroaralkyl group and A⁻ is the anion of an organic or inorganic acid, R² represents hydrogen or an optionally substituted C₁₋₂₈ alkyl, C₂₋₂₈ alkenyl, C₂₋₂₂ alkynyl, C₃₋₁₂ cycloalkyl, C₃₋₁₂ cycloalkenyl, C₇₋₉ aralkyl, C₃₋₂₈ heteroalkyl, C₃₋₁₂ cycloheteroalkyl, C₅₋₁₆ heteroaralkyl, phenyl, naphthyl or heteroaryl group, and R⁴ represents hydrogen or a C₁₋₂₈ alkyl, C₂₋₂₈ alkenyl, C₂₋₂₂ alkynyl, C₃₋₁₂ cycloalkyl, C₃₋₁₂ cycloalkenyl, C₇₋₉ aralkyl, C₃₋₂₀ heteroalkyl, C₃₋₁₂ cycloheteroalkyl, C₅₋₁₆ heteroaralkyl group or an optionally substituted phenyl or naphthyl or heteroaryl group,
R⁵, R⁶, R⁷ and R⁸ represent, independently of one another, R¹, hydrogen, halogen, a hydroxy, amino, an optionally substituted N-mono or di-C₁₋₄ alkyl or C₂₋₄ hydroxyalkyl amino, N-phenyl or N-naphthyl amino, C₁₋₂₈ alkyl, C₁₋₂₈ alkoxy, phenoxy, C₂₋₂₈ alkenyl, C₂₋₂₂ alkynyl, C₃₋₁₂ cycloalkyl, C₃₋₁₂ cycloalkenyl, C₇₋₉ aralkyl, C₃₋₂₀ heteroalkyl, C₃₋₁₂ cycloheteroalkyl, C₅₋₁₆ heteroaralkyl, phenyl or naphthyl group, wherein the substituents are selected from C₁₋₄ alkyl, C₁₋₄ alkoxy, hydroxy, sulfo, sulfato, halogen, cyano, nitro, carboxy, phenyl, phenoxy, naphthoxy, amino, N-mono or di-C₁₋₄ alkyl or C₂₋₄ hydroxyalkyl amino, N-phenyl or N-naphthyl amino groups, or
R⁵ and R⁶ or R⁶ and R⁷ or R⁷ and R⁸ are interconnected so as to form 1, 2 or 3 carbocyclic or O-, NR¹⁰- or S-heterocyclic, optionally aromatic and/or optionally C₁₋₆ alkyl-substituted rings, in order to improve the antimicrobial effectiveness of washing and cleaning agents, **characterized in that** a compound forming a peroxycarboxylic acid under perhydrolysis conditions is used together with the acyl hydrazone of general formula (I).

2. The use according to claim 1, **characterized in that** a washing agent containing an acyl hydrazone of general formula (I) is allowed to act on a stained textile as part of a washing process that is automatic or carried out by hand.

3. The use according to claim 2, **characterized in that** the agent contains 0.01 wt.% to 5 wt.%, in particular 0.05 wt.% to 0.2 wt.% of the compound according to formula (I).

4. The use according to one of claims 1 to 3, **characterized in that** the acyl hydrazone of general formula (I) is used in the presence of H₂O₂ or substances that release H₂O₂ in water.

5. The use according to one of claims 1 to 4, **characterized in that** the acyl hydrazone of general formula (I) is used in the presence of manganese, titanium, cobalt, nickel or copper ions.

6. The use according to one of claims 1 to 5, **characterized in that** the concentration of the compound according to formula (I) in the aqueous washing liquor is 0.5 µmol/l to 500 µmol/l, in particular 5 µmol/l to 100 µmol/l.

7. The use according to one of claims 1 to 6, **characterized in that** the peroxygen concentration (calculated as H₂O₂) in the washing liquor is in the range of from 0.001 g/l to 10 g/l, in particular from 0.1 g/l to 1 g/l, and particularly preferably from 0.2 g/l to 0.5 g/l.

8. The use according to one of claims 1 to 7, **characterized in that** the acyl hydrazone is used in the form of complex compounds of manganese, titanium, nickel or copper central atoms having ligands of general formula (I).

## Revendications

1. Utilisation d'une combinaison d'agent de blanchiment contenant du peroxygène avec une acylhydrazone de la formule générale I, 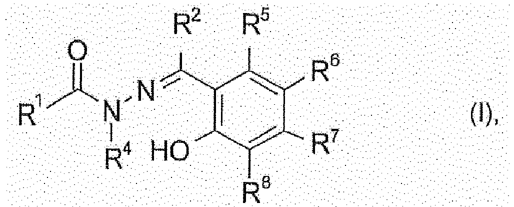 dans laquelle R¹ représente un groupe alkyle en C1-4, qui porte un substituant sélectionné parmi 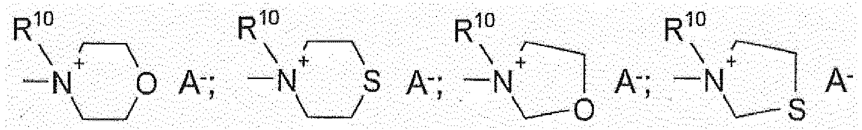
dans lequel dans lequel R¹⁰ représente de l'hydrogène ou un groupe alkyle en C₁₋₂₈, un groupe alcényle en C₂₋₂₈, un groupe alcynyle en C₂₋₂₂, un groupe cycloalkyle en C₃₋₁₂, un groupe cycloalcényle en C₃₋₁₂, un groupe aralkyle en C₇₋₉, un groupe hétéroalkyle en C₃₋₂₀, un groupe cyclohétéroalkyle en C₃₋₁₂, un groupe hétéroaralkyle en C₅₋₁₆ et A⁻ représente l'anion d'un acide organique ou inorganique,
R² représente de l'hydrogène ou un groupe alkyle en C₁₋₂₈, un groupe alcényle en C₂₋₂₈, un groupe alcynyle en C₂₋₂₂, un groupe cycloalkyle en C₃₋₁₂, un groupe cycloalcényle en C₃₋₁₂, un groupe aralkyle en C₇₋₉, un groupe hétéroalkyle en C₃₋₂₈, un groupe cyclohétéroalkyle en C₃₋₁₂, un groupe hétéroalkyle en C₅₋₁₆, un groupe phényle, un groupe naphtyle ou un groupe hétéroaryle, le cas échéant substitué,
R⁴ représente de l'hydrogène ou un groupe alkyle en C₁₋₂₈, un groupe alcényle en C₂₋₂₈, un groupe alcynyle en C₂₋₂₂, un groupe cycloalkyle en C₃₋₁₂, un groupe cycloalkényle en C₃₋₁₂, un groupe aralkyle en C₇₋₉, un groupe hétéroalkyle en C₃₋₂₀, un groupe cyclohétéroalkyle en C₃₋₁₂, un groupe hétéroaralkyle en C₅₋₁₆ ou un groupe phényle ou naphtyle ou hétéroaryle le cas échéant substitué,
R⁵, R⁶, R⁷ et R⁸ représentent indépendamment l'un de l'autre R¹, de l'hydrogène, de l'halogène, un groupe hydroxy, un groupe amino, un groupe n-mono-alkyle en C₁₋₄ le cas échéant substitué ou un groupe n-di-alkyle en C₁₋₄ le cas échéant substitué ou un groupe amino-hydroxyalkyle en C₂₋₄, un groupe n-phényle ou un groupe n-amino-naphtyle, un groupe alkyle en C₁₋₂₈, un groupe alcoxy en C₁₋₂₈, un groupe phénoxy, un groupe alcényle en C₂₋₂₈, un groupe alcynyle en C₂₋₂₂, un groupe cycloalkyle en C₃₋₁₂, un groupe cycloalcényle en C₃₋₁₂, un groupe aralkyle en C₇₋₉, un groupe hétéroalkyle en C₃₋₂₀, un groupe cyclohétéroalkyle en C₃₋₁₂, un groupe hétéroaralkyle en C₅₋₁₆, un groupe phényle ou un groupe naphtyle, les substituants étant sélectionnés parmi les groupes alkyle en C₁₋₄, les groupes alcoxy en C₁₋₄, les groupes hydroxy, les groupes sulfo, les groupes sulfato, les groupes halogènes, les groupes cyano, les groupes nitro, les groupes carboxy, les groupes phényles, les groupes phénoxy, les groupes naphtoxy, les groupes amino, les groupes n-mono-alkyle en C₁₋₄ ou les groupes n-di-alkyle en C₁₋₄ ou les groupes amino-hydroxyalkyle en C₂₋₄, les groupes n-phényle ou les groupes n-amino-naphtyle, ou R⁵ et R⁶ ou R⁶ et R⁷ ou R⁷ et R⁸ sont reliés l'un à l'autre en formant 1, 2 ou 3 cycles carbocycliques ou cycles hétérocycliques O, NR¹⁰ ou S, le cas échéant aromatiques et/ou le cas échéant substituants d'alkyle en C₁₋₆,
afin d'améliorer l'efficacité antimicrobienne d'agents nettoyants et d'agents détergents contenant du peroxygène, **caractérisé en ce que** l'on utilise un composé formant de l'acide peroxocarboxylique sous des conditions de perhydrolyse, avec l'acylhydrazone de la formule générale (I).

2. Utilisation selon la revendication 1, **caractérisée en ce que** l'on laisse agir un agent nettoyant contenant une acylhydrazone de la formule générale (I) dans le cadre d'un processus de nettoyage effectué avec une machine ou à la main sur un textile sali.

3. Utilisation selon la revendication 2, **caractérisée en ce que** l'agent contient de 0,01 % en poids à 5 % en poids, en particulier de 0,05 % en poids à 0,2 % en poids du composé selon la formule (I).

4. Utilisation selon l'une des revendications 1 à 3, **caractérisée en ce que** l'acylhydrazone de la formule générale (I) est utilisée en présence de H₂O₂ ou de substances libérant du H₂O₂ dans l'eau.

5. Utilisation selon l'une des revendications 1 à 4, **caractérisée en ce que** l'acylhydrazone de la formule générale (I) est utilisée en présence d'ions de manganèse, de titane, de cobalt, de nickel ou de cuivre.

6. Utilisation selon l'une des revendications 1 à 5, **caractérisée en ce que** la concentration du composé selon la formule (I) dans la matière tinctoriale aqueuse s'élève de 0,5 µmol/l à 500 µmol/l, en particulier de 5 µmol/l à 100 µmol/l.

7. Utilisation selon l'une des revendications 1 à 6, **caractérisée en ce que** la concentration en peroxygène (calculé en tant que H₂O₂) dans la matière tinctoriale aqueuse est comprise dans la plage allant de 0,001 g/l à 10 g/l, en particulier de 0,1 g/l à 1 g/l et de manière particulièrement préférée de 0,2 g/l à 0,5 g/l.

8. Utilisation selon l'une des revendications 1 à 7, **caractérisée en ce que** l'on utilise l'acylhydrazone sous forme de composés complexes d'atomes centraux de manganèse, de titane, de cobalt, de nickel ou de cuivre avec des ligands de la formule générale (I).
